# EUROPEAN PATENT SPECIFICATION

(11) **EP 2 928 307 B1**
(45) Date of publication and mention of the grant of the patent: **18.09.2019**
(21) Application number: 13860871.6
(22) Date of filing: 04.12.2013
(51) Int. Cl.: A21D 13/31, A21D 13/38, A21D 13/30, A23G 1/00, A23L 29/262, A23L 33/17, A23L 33/21

(54) **BAKE STABLE FILLING CONTAINING MICROPARTICLES**
BACKSTABILE FÜLLUNG MIT MIKROPARTIKELN
GARNITURE DE CUISSON STABLE CONTENANT DES MICROPARTICULES

(30) Priority: 05.12.2012 US 201261733682 P
(43) Date of publication of application: 14.10.2015
(73) Proprietor: Intercontinental Great Brands LLC, East Hanover, NJ 07936 (US)
(72) Inventor: CHA, Alice, S., Monterey, CA 93940 (US); HONG, Albert, A., Kildeer, IL 60047 (US); OMANS, Alicia, M., East Hanover, New Jersey 07936 (US)
(74) Representative: Boult Wade Tennant LLP
(86) International application number: PCT/US2013/073040
(87) International publication number: WO 2014/089170

(56) References cited:
- EP-A1- 2 386 206
- EP-A1- 2 386 206
- EP-A2- 0 222 601
- EP-A2- 0 750 843
- WO-A1-2004/008868
- WO-A2-2007/041395
- AU-A1- 2006 200 332
- US-A- 4 752 494
- US-A- 6 025 007
- US-A- 6 025 007
- US-A1- 2004 156 979
- US-A1- 2004 202 764
- US-A1- 2004 241 305
- US-A1- 2010 209 588
- TORO-SIERRA J., SCHUMANN J., KULOZIK U.: "Impact of spray-drying conditions on the particle size of microparticulated whey protein fractions", DAIRY SCIENCE AND TECHNOLOGY, vol. 93, no. 4, 12 April 2013 (2013-04-12) , pages 487-503,
- GAUDREAULT R., VAN DE VEN T.G.M, WHITEHEAD M.A.: "Mechanisms of flocculation with poly(ethylene oxide) and novel cofactors", COLLOIDS AND SURFACES, vol. 268, 24 August 2005 (2005-08-24), pages 131-146,

## Description

### BACKGROUND OF THE INVENTION

The present invention generally relates to compositions and methods for an intermediate moisture bake-stable filling containing microparticles.
US2004202764 discloses a bake stable filling with a water activity of less than 0.60.
AU2006200332 discloses a savory, bakeable, shelf-stable, and low-moisture filler composition.
EP2386206 discloses a bakeable and shelf stable filling.
WO2007041395 discloses compositions of microcrystalline cellulose, cellulose ether, and salt.
EP0750843 discloses a cheese-flavored filling for use in snacks.
EP0222601 discloses a thermostable edible crème.
US4752494 discloses a bland, intermediate water activity matrix for use in a crème.

### BRIEF SUMMARY OF THE INVENTION

According to a first aspect of the present invention, there is provided a bake stable filling comprising a liquid component and microparticles having a particle size of less than 8 microns. The liquid component includes the microparticles in an amount of 1 wt% to 30 wt% of the liquid component; preferably about 2 wt% to about 25 wt% of the liquid component. In some embodiments, the filling includes a ratio of microparticles to moisture of 1:60 to 1:4. The microparticles may include fibers, cellulose such as microcrystalline cellulose, protein such as whey protein, water insoluble food materials, or a combination thereof.

The filling includes the liquid component in an amount of 20 wt% to 50 wt% of the filling. In certain embodiments, the liquid component includes a polyhydric alcohol.

The filling has a water activity of 0.7 to 0.82. Preferably is includes less than 30 wt% fat; has a shelf life of at least about 3 months; and may contain no starch.

In some embodiments, the filling exhibits substantially no filling spread, or a spread of less than about 1 cm, in a radial direction beyond an original sample size when 20 c.c. (+/- 2 c.c.) of the filler is placed on filter paper and exposed to a temperature of about 150°C for about 10 minutes.

According to a further aspect of the invention there is provided a composite product comprising the filling of the first aspect and a baked good.

According to a further aspect of the present invention, there is provided a method of preparing a bake stable filling according to the first aspect, which method includes, providing ingredients for a liquid component; providing microparticles having a particle size of less than 8 microns; optionally providing any additional components; mixing at least the ingredients for the liquid component and the microparticles using a high shear device to provide a homogenous blend; wherein the liquid component includes microparticles in an amount of 1 wt% to 30 wt% of the liquid component. In some embodiments, the method includes passing the blend through a bead mill.

The foregoing summary, as well as the following detailed description of certain embodiments of the food product will be better understood when read in conjunction with the following exemplary embodiments and the drawing.

### BRIEF DESCRIPTION OF THE SEVERAL VIEWS OF THE DRAWINGS

- Figure 1: shows light microscopy images of one embodiment of this invention.
- Figure 2: shows particle size distribution of one embodiment of this invention.

### DETAILED DESCRIPTION OF THE INVENTION

Methods and compositions of the present invention relate to bake stable fillings which may sustain baking and extrusion processes with little or no liquid separation and minimum spread of fillings, and which may provide a creamy texture and mouthfeel in the finished product. Fillings of the present invention may be sweet or savory.

In some embodiments, fillings of the present invention are shelf-stable. In some embodiments, fillings of the present invention are shelf stable at ambient temperature for up to 1 year; up to 6 months; up to 3 months; or up to 1 month.

As used herein, "bake stable" is understood to mean that the filling is resistant to degradation and exhibits substantially no spread and substantially no oiling off when exposed to baking temperatures of about 150°C + 5°C for about 10 minutes. Because fillings may be partially insulated from actual baking temperatures by surrounding dough, a filling which is stable to a given temperature, such as 150°C, is suitable for use in a composite filled dough product which may be subjected to substantially higher cooking temperatures than 150°C.

Fillings which lack stability at a given temperature may become hard, dry, may oil out, may spread and perhaps become blown out from enclosed casing. Blown out fillers may brown significantly which may be partially the result of browning reactions between proteins and reducing sugars, or thermal degradation of sugars, such as lactose. An objective measure of hardening is the change in viscosity which a filling composition may undergo upon exposure to heat. While some increase in filling viscosity is acceptable, dramatic, e.g., ten-fold or more increases, are clear indicia of poor bake stability.

One simple screening test for bake stability in fillings involves observing the extent at which the filling spreads and oils off on a sheet when heated at a given temperature and time. If the spread test is conducted with the filling placed on a filter paper, the extent of "oiling off" may also be observed. Oiling off results in a ring of oil on the paper which will extend beyond the extent of the spread of the filler composition. Oiling off may be measured from the edges of the filing after it has been baked and may have expanded, versus the pre-baked filling position. Minimal spread and oil off are indicia of good bake stability. For example, one can place about 20 c.c. (+/- 2 c.c.) of filler composition in a semi-spherical shape on a filter paper (such as Whatman #1 filler paper or equivalent) and expose the filler to about 150°C for about 10 minutes. In some embodiments of the present invention, under such conditions the filling will exhibit substantially no filling spread; filling spread less than 1 cm beyond the outer edge of the original sample in a radial direction; less than about 0.8 cm beyond the outer edge of the original sample in a radial direction; or less than about 0.5 cm beyond the outer edge of the original sample in a radial direction. In some embodiments of the present invention, under such conditions the filling will exhibit substantially no oiling off; less than about 1 cm beyond the outer edge of the heated filling in a radial direction; less than about 0.8 cm beyond the outer edge of the heated filling in a radial direction; or less than about 0.5 cm beyond the outer edge of the heated filling in a radial direction.

In some embodiments, the filling includes a liquid continuous phase and a discontinuous phase. In some embodiments, the liquid continuous phase includes a liquid component and soluble solids. The liquid component can include, but not be limited to, water, moisture from ingredients, and plasticizing polyhydric alcohols such as glycerol or propylene glycol. The discontinuous phase can include, but not be limited to, emulsified fat, and insoluble materials including microparticles.

The filling contains microparticles which may contribute to the creamy texture and mouthfeel, and to bake stability. Microparticles may be part of a discontinuous phase of the filling and are suspended in the liquid continuous phase, and will be described in more detail herein.

In some embodiments, the filling contains no starch. Starch could compete with other soluble solids for hydration in a limited-water environment, and could increase the product viscosity significantly thereby making processing more difficult. In addition, the viscosity of a starch system may be sensitive to baking temperature which could cause the filler to spread significantly during baking. In one embodiment, the filling contains less than about 10% fat. In another embodiment, the filling contains less than about 20% fat. In another embodiment, the filling contains less than about 30% fat. Preferably, fat should be present in the emulsion to minimize the tendency for oiling off during baking or storage.

In some embodiments, fillings are added to a dough prior to baking to create a composite filled dough product. For example, fillings may be included between two layers of dough in a sandwich formation, as a filling completely enclosed by the dough, or as a layer on top of the dough. In some embodiments, the fillings are added to baked goods after baking.

### Liquid Continuous Phase

The liquid continuous phase can include, but not be limited to, a liquid component and other soluble materials. Fillings of the present invention may include a liquid component which may include water, moisture from added ingredients, and water miscible liquid, such as polyhydric alcohols. The fillings include a liquid component in an amount of 20 wt% to 50 wt% of the filling; or about 25 wt% to 50 wt% filling. In one embodiment, the liquid component may comprise a plasticizing polyhydric alcohol in an amount of at least about 10 wt%, at least about 15 wt %, or at least about 25 wt% of the liquid component.

To aid in obtaining the desired soft, creamy texture and to provide a controlled water activity in the product, in some embodiments a plasticizing polyhydric alcohol is employed at a level of at least about 2 wt% up to about 20 wt% of the filling; or about 4 wt% to about 15 wt% of the filling. Suitable plasticizing agents may include liquid, edible di-, or tri-hydric alcohols or sugar alcohols or other polyhydric alcohols of suitable flavor and effective for this purpose. Prominent among these are glycerol and propylene glycol, but others of this class and mixtures of these can be employed.

In addition to the plasticizing polyhydric alcohol, the liquid continuous phase may also contain sufficient other dissolved water-soluble materials capable of reducing water activity and arresting microbial growth in the composition. Suitable soluble materials may include non-sweet carbohydrates such as polydextrose and maltodextrin, and salts such as sodium chloride, sodium citrate, etc. Other soluble materials may include sweet carbohydrate such as high fructose corn syrup, corn syrup solids, and fructose syrup, glucose syrup, etc.

In some embodiments, the combined amount of the polyols and the dissolved soluble solids in a filling will be sufficient to provide the total filling with a desired water activity ("A_{w}"). The filling has a water activity of 0.7 to 0.82. In some embodiments, the filling has a water activity of about 0.8. The water activity of the filling may be an important factor in maintenance of both microbiological and textural stability of the filling and any composite it is used to make.

In some embodiments, the filling exhibits yield stress sufficient to prevent the spread or ooze out of fillers before, during and after baking. While not wishing to be bound by theory, the yield stress of a filling may be primarily dominated by a ratio of microparticles to moisture in the liquid component. The yield stress of the product should be greater than about 100 Pa; greater than about 500 Pa; greater than about 1000 Pa; greater than about 1500 Pa; greater than about 2000 Pa; greater than about 2500 Pa; greater than about 3000 Pa; or within the range of from about 100 Pa to about 3500 Pa; as measured by a Haake Viscotester, Model 550 at 25°C using four bladed 16 x 6 mm vane
fixture at 0.1 rpm. Fillings of some embodiments of the present invention may include any additional suitable ingredients, including emulsifiers, stabilizers, flavoring ingredients, and/or humectants in an effective amount to provide a desired water activity, flavor, and consistency of the filling.

In some cases, a flavor modifier such as any of those mentioned in U.S. Pat. No. 5,641,795 can be employed in minor amounts, such as up to about 2.0 wt% of the filling or from about 0.5 wt% to about 1.0 wt% of the filling, to suppress any undesired sweetness provided by glycerol, propylene glycol or the like. One such product comprises a lactisole powder (1% lactisole) and is sold under the trademark Super Envision by Domino Sugar.

### Discontinuous Phase

A filling may also include a discontinuous phase, including undissolved solids. In some embodiments, the filling includes a savory flavor, such as dehydrated cheese powder. In certain embodiments, the filling may include a dehydrated cheese powder in an amount of about 5 wt% to about 50 wt% of the filling; about 10 wt% to about 45 wt% of the filling; about 15 wt% to about 40 wt% of the filling; about 20 wt% to about 35 wt% of the filling; about 5% of filling; about 10 wt% of the filling; about 15 wt% of the filling; about 20 wt% of the filling; about 25 wt% of the filling; about 30 wt% of the filling; about 35 wt% of the filling; about 40 wt% of the filling; about 45 wt% of the filling; or about 50 wt% of the filling. Suitable dehydrated cheese powder may especially include flavorful cheese such as cheddar cheese or cream cheese, which might be blended with such optional ingredients such as cream, salt, sodium phosphate and lactic acid. Such a product with approximately a 50% fat content is available, for example, from Kraft Food Ingredients under the brand name CheezTang. Other flavor enhancers such as liquid flavor concentrate, monosodium glutamate, yeast extracts, lactic acid, etc. can also be used to improve flavor profile.

The flavor of fillers is preferably principally provided by the flavor in dehydrated or concentrated form. For example, in the case of cheese, the flavor should come principally from a suitable cheese flavor ingredient, such as cheese powder flavor, that is substantially insoluble in the aqueous liquid phase. Suitable for use as the cheese ingredient other than materials that may be referred to as cheese powders flavors are cheese products having a suitably small particle size and substantially equivalent properties and flavor. In some embodiments, a preferred cheese powder flavor is a high fat cheese powder flavor of the approximate composition of the CheezTang flavor product described above. For fruit flavored fillers, the flavor may principally be from dehydrated fruit powders and/or fruit concentrates.

In addition to solid cheese flavors, other like solid savory flavors can be employed. For example, egg powders, meat powders, vegetable powders and the like can be employed in some embodiments.

In some embodiments, the particle size of the undissolved solids is important to the final texture. The particle size may be determined organoleptically and in some embodiments is below the threshold at which graininess is perceived. Many materials form loose aggregates that break down in the mouth to sizes within these ranges and are acceptable according to the invention. In some embodiments, the filling includes undissolved flavor ingredients. It has been found to be important that when a filling includes undissolved flavor ingredients, such ingredients are of sufficiently small particle size to provide the proper mouthfeel, flavor release and texture consistent with the savory flavor. For example, the mouthfeel for cheese fillings should be smooth and creamy and the yield stress high enough for the product to stay in place both before and after any heat treatment such as baking. In some embodiments, a cheese filling will have a lubricous, slippery, smooth mouthfeel and a flavor release that endures until the palate is essentially clean. For such fillings, it may be undesirable for the flavor to be completely released during the dissolution in saliva of only the liquid phase, leaving an unflavored portion of undissolved solids in the mouth.

### Microparticles

Fillings of the present invention include microparticles in an amount of 1wt% to 30wt% if the liquid component. When included in a filling at suitable levels, microparticles contribute to a desirable texture of smooth particle gels, creamy texture and/or mouthfeel, and/or bake stability. In some embodiments, inclusion of particles in a desired amount and/or of a desired size may provide a filling with a desirable yield stress, resulting in a filling having minimal spread before, during, and after baking. In some embodiments, such desirable yield stress and accompanying minimal-spread properties of the filling is a result of microparticles in the
liquid component forming a particle gel, or sol. The formation of such gel or sol may be related to the size and/or amount of the microparticles included in the formulation.

Suitable microparticles may include fibers, cellulose, denatured/insoluble protein, water insoluble food materials, or a combination thereof. Suitable microparticles have a particle size of 8 microns or less; about 5 microns or less; or about 3 microns or less.

In some embodiments, microparticles may be prepared by any suitable means, including jet milling, bead milling, denaturation, or precipitation. Commercially available microparticles may include Avicel (microcrystalline cellulose) and Simplesse (whey protein). In some embodiments, commercially available microparticles may be redistributed using a high shear device such as a Breddo high shear mixer or homogenizer, in order to further redistribute microparticle ingredients and to further emulsify fat particles.

In some embodiments, the amount of microparticles in the liquid component in the filling may be important for achieving the desired bake stability and/or taste and texture characteristics. The filling includes microparticles in an amount of 1 wt% to 30 wt% of the liquid component of the filling; 1 wt% to about 28 wt% of the liquid component of the filling; about 2 wt% to about 25 wt% of the liquid component of the filling; about 3 wt% to about 25 wt% of the liquid component of the filling; about 4 wt% to about 22 wt% of the liquid component of the filling; about 5 wt% to about 20 wt% of the liquid component of the filling; about 6 wt% to about 18 wt% of the liquid component of the filling; about 7 wt% to about 16 wt% of the liquid component of the filling; about 8 wt% to about 14 wt% of the liquid component of the filling; about 9 wt% to about 12 wt% of the liquid component of the filling; 1 wt% of the liquid component of the filling; about 2 wt% of the liquid component of the filling; about 3 wt% of the liquid component of the filling; about 4 wt% of the liquid component of the filling; about 5 wt% of the liquid component of the filling; about 6 wt% of the liquid component of the filling; about 7 wt% of the liquid component of the filling; about 8 wt% of the liquid component of the filling; about 9 wt% of the liquid component of the filling; about 10 wt% of the liquid component of the filling; about 11 wt% of the liquid component of the filling; about 12 wt% of the liquid component of the filling;
about 13 wt% of the liquid component of the filling; about 14 wt% of the liquid component of the filling; about 15 wt% of the liquid component of the filling; about 16 wt% of the liquid component of the filling; about 17 wt% of the liquid component of the filling; about 18 wt% of the liquid component of the filling; about 19 wt% of the liquid component of the filling; about 20 wt% of the liquid component of the filling; about 22 wt% of the liquid component of the filling; about 25 wt% of the liquid component of the filling; about 26 wt% of the liquid component of the filling; about 28 wt% of the liquid component of the filling; or 30 wt% of the liquid component of the filling.

As mentioned above, the amount of microparticles in the filling may be important for providing the desired yield stress and spread properties before, during, and after baking. The ratio of microparticles to moisture in the filling may be important for achieving the desired bake stability and/or taste and texture characteristics. In some embodiments, the filling includes a weight ratio of microparticles to moisture of about 1:80 to about 1:2; about 1:60 to about 1:2; about 1:60 to about 1:4; about 1:32 to about 1:2; about 1:30 to about 1:4; about 1:30; about 1:28; about 1:26; about 1:24; about 1:22; about 1:20; about 1:19; about 1:18; about 1:17; about 1:16; about 1:15; about 1:14; about 1:13; about 1:12; about 1:11; about 1:10; about 1:9; about 1:8; about 1:7; about 1:6; about 1:5; about 1:4; about 1:3; or about 1:2.

### Preparation of the Filling

The process of the invention entails mixing the ingredients in a manner that provides a uniform blend having the noted desirable textural properties. The process involves a high shear mixing step which effectively homogenizes the product and/or redistributes the microparticles. In addition, the high shear mixing reduces the size of the oil droplets which are dispersed throughout the savory filler composition.

In some embodiments, the filling ingredients are mixed and the resulting mixture is passed through a homogenizer and/or a bead mill. Homogenization and/or micromilling may further break down any microparticle ingredients and/or fat particles, and may stabilize the filling emulsion. In some embodiments, the filling ingredients are mixed and heated, and the resulting mixture is passed through a homogenizer at 34.5Mpa/3.4Mpa (5000/500
psi). In some embodiments, the filling ingredients are mixed and heated, and the resulting mixture is passed through a bead mill such as a K8 bead mill from Buhler.

### Baked Dough Product

In some embodiments, a filling of the present invention may be used to prepare a baked dough and filling composite product comprising at least one discrete region of a filling as described above and at least one discrete region of a baked dough. In some embodiments, the dough is baked to non-crisp texture. This enables the preparation of filled or topped baked goods soft pretzels, soft bread, soft cake and the like.

The doughs can be formed on any of the conventional equipment, including laminators, extruders, depositors, rotary formers, wire cutters, and the like. The filling of the invention can be applied onto or into a preformed dough piece in any manner suitable and the resulting composite can be baked or otherwise cooked, e.g., fried, extruder heated, or the like. The invention enables the baking of the dough to a non-crisp texture without degrading the filling to an extent that oil of liquid migrates to the baked dough to cause textural or color problems. The filling will also not adversely affect the texture of the baked good. The filling can also be added to a baked good after the dough has been partially or fully baked. Conventional baking apparatus can be employed.

The term "dough" as used in this context includes all formulations that the person skilled in the art would consider dough. In some embodiments, these formulations contain a starch component and at least sufficient water to hydrate the starch, both being employed in reasonable proportions. The starch component can be provided as whole grain or grain ground or refined to any desired degree. It can be supplied in the form of flour, e.g., from wheat, barley, corn, oats, rice, rye, treacle, and the like. Or the starch component can be supplied as a purified or mechanically refined or less than whole grain flour. In some embodiments, the dough may be a starchless dough. The water can comprise water itself or an aqueous liquid such as milk (whole, skim, homogenized, buttermilk, or soy), fruit or vegetable juice, and the like. Yeast or chemical leavenings are also typically present. Also typically, the dough will contain shortening in an amount suitable for achieving the textural characteristics desired for a given type of product. In addition, the dough may also contain humectants in order to reduce the water activities of baked dough to within about 0.2 water activity, more preferably within about 0.1 water activity, most preferably within about 0.05 water activity of fillers. All other conventional ingredients, typical for desired recipes, can be employed. The entire text of Manley, J. R.; Technology of Biscuits, Crackers and Cookies, Vols. 1 and 2, is incorporated herein by reference for its descriptions of conventional ingredients and processing.

In another aspect, the invention provides products as described above, packaged in sealed containers, e.g., of either rigid or flexible construction. In one embodiment, a flexible plastic tube is provided for squeezing the filling onto or into a cooked or raw food product for eating as is or after cooking. The process of packaging is not changed from what is typically known for products of like viscosity.

The following examples are provided to further illustrate and explain a preferred form of the invention and are not to be taken as limiting in any regard. Unless otherwise indicated, all parts and percentages are by weight.

Examples - The following Examples provide exemplary filling compositions. None of the filings state the particle sizes of the ingredients. In-so-far as these Examples contain microparticles having a particle size of less than 8 microns in an amount of 1 to 30wt% of the liquid component, they would be considered as examples of the present invention.

### Example 1 - Cheese filling using microcrystalline cellulose through homogenization

A cheese filling composition was prepared by mixing and heating the following ingredients (% by weight) to about 65°C. Then, the mixture was passed through the homogenizer at 34.5Mpa/3.4Mpa (5000/500 psi).

| Ingredients | % by Weight |
|---|---|
| Water | 25.00 |
| Glycerol | 8.5 |
| Microcrystalline cellulose | 3.5 |
| Cheese/cream powders | 28.0 |
| Maltodextrin | 24.24 |
| Tri-calcium phosphate | 4.5 |
| Emulsifying salts | 3.0 |
| Salt | 1.2 |
| Emulsifier | 0.5 |
| Lactic acid | 0.4 |
| Flavoring ingredients | 0.95 |
| Preservatives | 0.15 |
| Colors | 0.06 |
| Total | 100.00 |

| | |
|---|---|
| Total Aw value = 0.758 | |

### Example 2 - Cheese filling using Simplesse through homogenization

A cheese filling composition was prepared by mixing and heating the following ingredients (% by weight) to about 65°C. Then, the mixture was passed through the homogenizer at 34.5Mpa/3.4Mpa (5000/500 psi). The particle size distribution curve is bimodal with the median particle size (D50) of 0.57um.

| Ingredients | % by Weight |
|---|---|
| Water | 25.00 |
| Glycerol | 8.5 |
| Simplesse (denatured WPC) | 4 |
| Cheese/cream powders | 28.0 |
| Maltodextrin | 23.29 |
| Tri-calcium phosphate | 4.5 |
| Emulsifying salts | 3.0 |
| Salt | 1.2 |
| Emulsifier | 0.5 |
| Konjac gum | 0.45 |
| Lactic acid | 0.4 |
| Flavoring ingredients | 0.95 |
| Preservatives | 0.15 |
| Colors | 0.06 |
| Total | 100.00 |

| | |
|---|---|
| Total Aw value = 0.795 | |

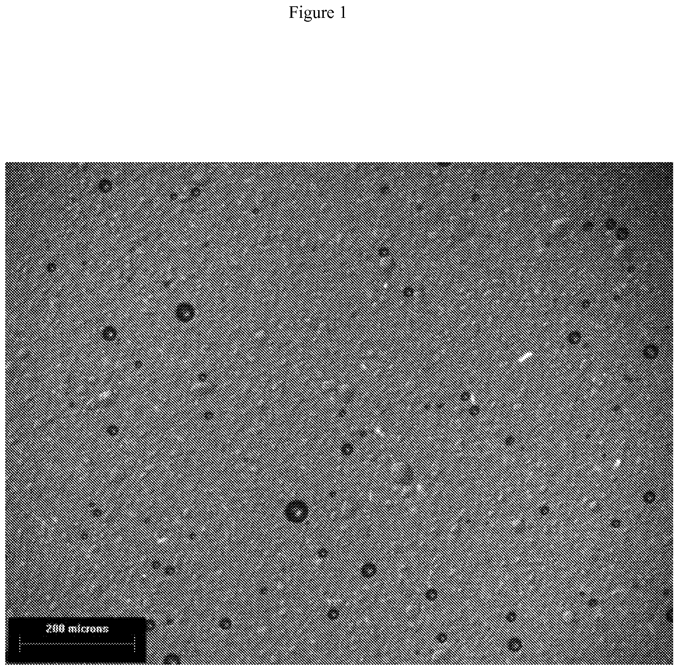

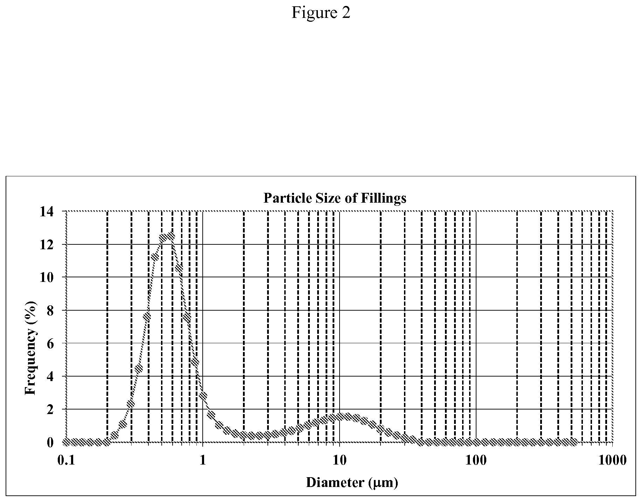

Microscopy images and particle size distribution of the filling are shown in Figures 1 and 2 respectively.

### Example 3 - Cheese filling using wheat fiber through micromilling

A cheese filling composition was prepared by mixing and heating the following ingredients (% by weight) to about 60°C. Then, the mixture was passed through the bead mill (K8 bead mill from Buhler) filled with 85% of 1.5 mm ceramic beads rotated at 1200 rpm. The flow rate was about 145 g/min.

| Ingredients | % by Weight |
|---|---|
| Water | 25.00 |
| Glycerol | 8.5 |
| White wheat fiber | 2.0 |
| Cheese/cream powders | 26.0 |
| Maltodextrin | 27.14 |
| Tri-calcium phosphate | 4.5 |
| Emulsifying salts | 3.0 |
| Salt | 1.5 |
| Emulsifier | 0.5 |
| Lactic acid | 0.6 |
| Flavoring ingredients | 1.05 |
| Preservatives | 0.15 |
| Colors | 0.06 |
| Total | 100.00 |

| | |
|---|---|
| Total Aw value = 0.778 | |

### Example 4 - Cheese filling using microcrystalline cellulose through homogenization

A cheese filling composition was prepared by mixing and heating the following ingredients (% by weight) to about 65°C. Then, the mixture was passed through the homogenizer at 34.5Mpa/3.4Mpa (5000/500 psi).

| Ingredients | % by Weight |
|---|---|
| Low fat cream cheese | 40.00 |
| Glycerol | 8.5 |
| Microcrystalline cellulose | 4.0 |
| Maltodextrin | 40.09 |
| Tri-calcium phosphate | 4.68 |
| Salt | 1.18 |
| Emulsifier | 0.5 |
| Lactic acid | 0.4 |
| Flavoring ingredients | 0.50 |
| Preservatives | 0.15 |
| Total | 100.00 |

| | |
|---|---|
| Total Aw value = 0.772 | |

### Example 5 - Chocolate filling using microcrystalline cellulose through homogenization

A chocolate filling composition was prepared by mixing and heating the following ingredients (% by weight) to about 65°C. Then, the mixture was passed through the homogenizer at 34.5Mpa/3.4Mpa (5000/500 psi).

| Ingredients | % by Weight |
|---|---|
| Water | 18.00 |
| Glycerol | 11.50 |
| Microcrystalline Cellulose | 3.50 |
| Cocoa Powder | 4.50 |
| Maltodextrin | 27.33 |
| Fat/Oil | 8.0 |
| Sweeteners | 18.00 |
| Non-fat Dried Milk | 8.0 |
| Emulsifier | 0.5 |
| Preservatives | 0.10 |
| Flavoring Ingredients | 0.37 |
| Methocel gum | 0.20 |
| Total | 100.00 |

| | |
|---|---|
| Total Aw value = 0.70 | |

## Claims

1. A bake stable filling comprising:
(a) a liquid component in an amount of 20 wt% to 50 wt% of the filling; and
(b) microparticles having a particle size of less than 8 microns;
wherein the liquid component includes microparticles in an amount of 1 wt% to 30 wt% of the liquid component,
wherein the filling has a water activity of 0.7 to 0.82.

2. The filling of claim 1, wherein the filling includes a ratio of microparticles to moisture of 1:60 to 1:4.

3. The filling of claim 1, wherein the microparticles comprise fibers, cellulose, protein, water insoluble food materials, or a combination thereof, or comprise microcrystalline cellulose, whey protein, or a combination thereof.

4. The filling of claim 1, wherein the liquid component comprises a polyhydric alcohol and/or water.

5. The filling of claim 1, wherein the filling exhibits substantially no filling spread in a radial direction beyond an original sample size when 20cm³ of the filler is placed on filter paper and exposed to a temperature of 150°C for 10 minutes.

6. The filling of claim 1, wherein the filling exhibits a spread of less than 1 cm in a radial direction beyond an outer edge of an original sample when 20cm³ of the filler is placed on filter paper and exposed to a temperature of 150°C for 10 minutes.

7. The filling of claim 1, wherein the filling includes less than 30 wt% fat.

8. The filling of claim 1, wherein the filling has a shelf life of at least 3 months.

9. The filling of claim 1, wherein the filling contains no starch.

10. The filling of claim 1, further comprising lipids, insoluble solids, soluble solids, or a combination thereof.

11. A composite product comprising the filling of claim 1 and a baked good.

12. A method of preparing a bake stable filling according to any one of claims 1-11, the method comprising:
(a) providing ingredients for a liquid component;
(b) providing microparticles having a particle size of less than 8 microns;
(c) mixing the ingredients for the liquid component and the microparticles using a high shear device to provide a homogenous blend, wherein the liquid component includes microparticles in an amount of 1 wt% to 30 wt% of the liquid component.

13. The method of claim 12, further comprising passing the blend through a bead mill, a homogenizer, or a combination thereof.

## Patentansprüche

1. Backstabile Füllung, die Folgendes umfasst:
(a) eine flüssige Komponente in einer Menge zu 20 Gew-% bis 50 Gew-% der Füllung; und
(b) Mikroteilchen, die eine Teilchengröße von weniger als 8 Mikrometer aufweisen;
wobei die flüssige Komponente Mikroteilchen in einer Menge zu 1 Gew-% bis 30 Gew-% der flüssigen Komponente einschließt,
wobei die Füllung eine Wasseraktivität von 0,7 bis 0,82 aufweist.

2. Füllung nach Anspruch 1, wobei die Füllung ein Verhältnis von Mikroteilchen zu Feuchtigkeit von 1:60 bis 1:4 einschließt.

3. Füllung nach Anspruch 1, wobei die Mikroteilchen Fasern, Zellulose, Protein, in Wasser unlösliche Lebensmittelmaterialien oder eine Kombination davon umfassen, oder mikrokristalline Zellulose, Molkeprotein oder eine Kombination davon umfassen.

4. Füllung nach Anspruch 1, wobei die flüssige Komponente einen mehrwertigen Alkohol und/oder Wasser umfasst.

5. Füllung nach Anspruch 1, wobei die Füllung im Wesentlichen keine Füllungsausbreitung in einer radialen Richtung über eine ursprüngliche Probengröße hinaus aufweist, wenn 20 cm³ des Füllers auf Filterpapier platziert wird und einer Temperatur von 150 °C für 10 Minuten ausgesetzt wird.

6. Füllung nach Anspruch 1, wobei die Füllung eine Ausbreitung von weniger als 1 cm in einer radialen Richtung über eine Außenkante einer ursprünglichen Probe hinaus aufweist, wenn 20 cm³ des Füllers auf Filterpapier platziert wird und einer Temperatur von 150 °C für 10 Minuten ausgesetzt wird.

7. Füllung nach Anspruch 1, wobei die Füllung weniger als zu 30 Gew.-% Fett einschließt.

8. Füllung nach Anspruch 1, wobei die Füllung eine Haltbarkeitsdauer von mindestens 3 Monaten aufweist.

9. Füllung nach Anspruch 1, wobei die Füllung keine Stärke enthält.

10. Füllung nach Anspruch 1, die ferner Lipide, unlösliche Feststoffe, lösliche Feststoffe oder eine Kombination davon umfasst.

11. Verbundprodukt, das die Füllung nach Anspruch 1 und eine Backware umfasst.

12. Verfahren zur Herstellung einer backstabilen Füllung nach einem der Ansprüche 1 bis 11, wobei das Verfahren Folgendes umfasst:
(a) Bereitstellen von Inhaltsstoffen für eine flüssige Komponente;
(b) Bereitstellen von Mikroteilchen, die eine Teilchengröße von weniger als 8 Mikrometer aufweisen;
(c) Mischen der Inhaltsstoffe für die flüssige Komponente und der Mikroteilchen unter Verwendung einer Vorrichtung mit hoher Scherkraft, um eine homogene Mischung bereitzustellen, wobei die flüssige Komponente Mikroteilchen in einer Menge zu 1 Gew-% bis 30 Gew-% der flüssigen Komponente einschließt.

13. Verfahren nach Anspruch 12, das ferner das Leiten der Mischung durch eine Perlmühle, einen Homogenisator oder eine Kombination davon umfasst.

## Revendications

1. Fourrage stable à la cuisson comprenant :
(a) un composant liquide en une quantité de 20 % en poids à 50 % en poids du fourrage ; et
(b) des microparticules ayant une taille de particules inférieure à 8 microns ;
dans lequel le composant liquide inclut des microparticules en une quantité de 1 % en poids à 30 % en poids du composant liquide,
dans lequel le fourrage a une activité de l'eau de 0,7 à 0,82.

2. Fourrage selon la revendication 1, dans lequel le fourrage inclut un rapport des microparticules à l'humidité de 1:60 à 1:4.

3. Fourrage selon la revendication 1, dans lequel les microparticules comprennent des fibres, de la cellulose, une protéine, des matières alimentaires insolubles dans l'eau, ou une combinaison de celles-ci, ou comprennent de la cellulose microcristalline, une protéine de lactosérum, ou une combinaison de celles-ci.

4. Fourrage selon la revendication 1, dans lequel le composant liquide comprend un alcool polyhydrique et/ou de l'eau.

5. Fourrage selon la revendication 1, dans lequel le fourrage ne présente sensiblement pas d'étalement de fourrage dans une direction radiale au-delà d'une taille d'échantillon original lorsque 20 cm³ du fourrage sont placés sur un papier-filtre et exposés à une température de 150 °C pendant 10 minutes.

6. Fourrage selon la revendication 1, dans lequel le fourrage présente un étalement inférieur à 1 cm dans une direction radiale au-delà d'un bord externe d'un échantillon original lorsque 20 cm³ du fourrage sont placés sur un papier-filtre et exposés à une température de 150 °C pendant 10 minutes.

7. Fourrage selon la revendication 1, dans lequel le fourrage inclut moins de 30 % en poids de matière grasse.

8. Fourrage selon la revendication 1, dans lequel le fourrage a une durée de conservation d'au moins 3 mois.

9. Fourrage selon la revendication 1, dans lequel le fourrage ne contient pas d'amidon.

10. Fourrage selon la revendication 1, comprenant en outre des lipides, des matières solides insolubles, des matières solides solubles, ou une combinaison de ceux-ci.

11. Produit composite comprenant le fourrage selon la revendication 1 et un article cuit au four.

12. Procédé de préparation d'un fourrage stable à la cuisson selon l'une quelconque des revendications 1 à 11, le procédé comprenant :
(a) la fourniture d'ingrédients pour un composant liquide ;
(b) la fourniture de microparticules ayant une taille de particules inférieure à 8 microns ;
(c) le mélange des ingrédients pour le composant liquide et les microparticules en utilisant un dispositif à cisaillement élevé pour fournir un mélange homogène, dans lequel le composant liquide inclut des microparticules en une quantité de 1 % en poids à 30 % en poids du composant liquide.

13. Procédé selon la revendication 12, comprenant en outre le passage du mélange à travers un broyeur à billes, un homogénéiseur, ou une combinaison de ceux-ci.
